# EUROPÄISCHE PATENTANMELDUNG

(11) **EP 1 362 795 A2**
(43) Veröffentlichungstag der Anmeldung: **19.11.2003**
(21) Anmeldenummer: 03000836.1
(22) Anmeldetag: 15.01.2003
(51) Int. Cl.: B65D 65/40, B32B 7/12, B32B 27/08, B32B 27/10, B32B 15/08, B32B 31/00

(54) **Verfahren zur Herstellung eines Verbundmaterials mit temperaturbeständigem Haftvermittler und danach hergestelltes Verbundmaterial**

(30) Priorität: 22.04.2002 DE 10217941
(71) Anmelder: SIG Combibloc Systems GmbH, 52441 Linnich (DE)
(72) Erfinder: Bothor, Roland, Dr., 52072 Aachen (DE); Danckworth, Jens, 52062 Aachen (DE); Wolters, Michael, Dr., 52525 Heinsberg (DE); Linden, Johannes, 52066 Aachen (DE)
(74) Vertreter: Cohausz & Florack

(57) **Zusammenfassung**

Dargestellt und beschrieben sind ein Verfahren zur Herstellung eines Verbundmaterials mit temperaturbeständigem Haftvermittler und ein danach hergestelltes Verbundmaterial, insbesondere für sterilisierbare oder autoklavierbare Verpackungen, mit wenigstens einer Barriereschicht, wobei zur Erhöhung der Haftung zwischen der Barriereschicht und einer Kunststoff- oder Kartonschicht wenigstens eine Haftvermittlerschicht vorgesehen ist. Um auf die thermische Nachbehandlung des Verbundmaterials vollkommen verzichten zu können, ist vorgesehen, dass vor dem Aufbringen der Haftvermittlerschicht eine Wärmebehandlung der zu beschichtenden Schicht erfolgt. Auf diese Weise werden die Abmessungen der Beschichtungsanlagen und die damit zusammenhängenden Investitionen reduziert.

## Beschreibung

Die Erfindung betrifft ein Verfahren zur Herstellung eines Verbundmaterials, insbesondere für sterilisierbare, pasteurisierbare oder autoklavierbare Verpackungen, mit wenigstens einer Barriereschicht, wobei zur Erhöhung der Haftung zwischen der Barriereschicht und einer Kunststoff- oder Kartonschicht wenigstens eine Haftvermittlerschicht vorgesehen ist sowie ein nach einem solchen Verfahren hergestelltes Verbundmaterial.

Auf dem Gebiet der Verpackungen sind - insbesondere aus dem Lebensmittelbereich - Verbundmaterialien in unterschiedlichsten Ausführungen bekannt. Als Trägermaterial dient hier in der Regel Papier oder Karton; eine Kaschierung aus unterschiedlichen Schichten sorgt für die für den jeweiligen Einsatzzweck benötigte Dichtigkeit und somit für die Haltbarkeit des jeweils abgefüllten Produktes. Damit ein solches Verbundmaterial heißsiegelbar ist, bestehen die äußeren Schichten meist aus Polyethylen (PE) oder einem anderen geeigneten heißsiegelfähigen thermoplastischen Polymer.

Zahlreiche abzufüllende Produkte, wie beispielsweise Milch, Saft oder Food-Produkte behalten unter aseptischen Bedingungen und/oder nach dem Autoklavieren ihre Qualität nur bei, wenn sie auch gegen Licht, Fremdaromen und Sauerstoff ausreichend geschützt sind. Dazu dienen Verbundmaterialien mit einer Barriereschicht, die für sich bekannt sind. Auch seit langem bekannt ist der Einsatz von Haftvermittlern zur Erhöhung der Haftung zwischen zwei Schichten, beispielsweise einer Kunststoff- oder Kartonschicht und einer Barriereschicht. Für Haftvermittlerschichten kommen in der Regel solche Haftvermittler zum Einsatz, die für normale Gebrauchstemperaturen ausgelegt sind, also beispielsweise für aseptisch abgefüllte Lebensmittel in Kartonverbundpackungen. Solche Haftvermittler werden beispielsweise durch Laminier-, Kaschier-, Coextrusions- oder Beschichtungsverfahren aufgebracht und benötigen in der Regel keine besondere Form der thermischen Vor- oder Nachbehandlung, um eine optimale Haftung zu erzielen.

Für den Einsatz von sterilisierbaren, pasteurisierbaren bzw. autoklavierbaren Verpackungen jedoch sind die vorgenannten Haftvermittler ungeeignet, da sie durch die Temperaturbeanspruchung während der Sterilisation bzw. während des Autoklavierens zerstört werden und ggf. ihre Haftvermittlungseigenschaft verlieren. Daher können für diesen Anwendungsfall nur temperaturbeständige Haftvermittler verwendet werden. Alle bekannten Haftvermittler benötigen aber eine thermische Nachbehandlung, nachdem sie, beispielsweise durch einen Beschichtungsprozess, auf das Trägermaterial aufgebracht worden sind.

Aus dem Stand der Technik ist es bereits bekannt, eine thermische Nachbehandlung in einem Wärmeofen durchzuführen. Hierbei wird das Verbundmaterial auf ein Temperaturniveau von ca. 250 bis 300 °C aufgeheizt, um ein optimales Niveau an Haftvermittlung zu erzielen. Solche Wärmeöfen sind häufig in die bestehenden Beschichtungsanlagen integriert. Dies führt dazu, dass die vorhandenen Beschichtungsanlagen entsprechend groß bauen, um die ausreichende Verweildauer des Verbundmaterials in den bekannten Luft- bzw. Gasöfen zu gewährleisten. Dies hat den Nachteil eines nicht unerheblichen Platzbedarfs und damit zusammenhängenden erheblichen Kosten. Darüber hinaus treten durch den Luftkontakt mit der Verbundmaterialoberfläche auf hohem Temperaturniveau auch unerwünschte Nebenwirkungen auf, wie Geschmacksbeeinträchtigung, Verschlechterung der Siegeleigenschaften, Veränderung der Bedruckbarkeit etc.

Davon ausgehend liegt der vorliegenden Erfindung die Aufgabe zugrunde, das eingangs genannte und zuvor näher beschriebene Verfahren zur Herstellung eines Verbundmaterials und ein danach hergestelltes Verbundmaterial so auszugestalten und weiterzubilden, dass auf die thermische Nachbehandlung des Verbundmaterials vollkommen verzichtet werden kann. So sollen die Abmessungen der Beschichtungsanlagen und die damit zusammenhängenden Investitionen reduziert werden.

Die Lösung der Aufgabe besteht hinsichtlich des Verfahrens darin, dass vor dem Aufbringen der Haftvermittlerschicht eine Wärmebehandlung der zu beschichtenden Schicht erfolgt.

Zunächst wird also eine Haftvermittlerschicht zwischen der zu verbindenden Barriereschicht, beispielsweise einer Aluminiumfolie, und einer Kunststoff- oder Kartonschicht aufgebracht. Dies kann mittels Laminieren, Coextrusion, Kaschierung oder Beschichtung erfolgen. In dem darauffolgenden erfindungsgemäßen Prozessschritt wird dann kurzzeitig ein relativ hoher Wärmeimpuls auf das Verbundmaterial aufgebracht, entweder auf der Oberfläche der zu beschichtenden Schicht oder, alternativ, der der Schicht abgewandten Oberfläche der zu beschichtenden Schicht. Die so in einem kurzen Zeitraum eingebrachte Wärmeenergie wird im Verbundmaterial gespeichert und führt zu einer deutlichen Erhöhung der Temperatur des Verbundmaterials. Auf diesen stark temperaturerhöhten Verbund kann nun barriereschichtseitig eine weitere Haftvermittlerschicht mit erforderlichenfalls weiteren Polymerschichten aufgebracht werden.

Aufgrund der erfindungsgemäßen, bevorzugt impulsartigen Wärmeeinbringung auf einem hohem Temperaturniveau und der gleichzeitigen vorübergehenden Speicherung der Wärmeenergie im Verbund, kommt es zu sehr hohen Haftungskräften auf beiden Seiten der Barriereschicht durch den erfindungsgemäß aktivierten Haftvermittler. Die Höhe der Haftung entspricht dem Festigkeitsniveau von konventionell in Wärmeöfen aktivierten Verbunden.

Durch die erfindungsgemäße thermische Behandlung werden negative Eigenschaftsänderungen durch eine nachgeschaltete thermische Wärmebehandlung in einem Wärmeofen zuverlässig ausgeschlossen.

Die Art der Wärmebehandlung kann nach weiterer Ausgestaltung der Erfindung vielseitig sein. Die Wärmeenergie lässt sich bevorzugt durch Flammbehandlung, Heißluftbehandlung, Laserbehandlung, Coronabehandlung, elektrischer Beheizung und eine Hochfrequenz-Behandlung erreichen.

Nach einer weiteren Lehre der Erfindung erfolgt die Wärmebehandlung erst nach dem Aufbringen einer ersten Barriereschicht auf eine Kunststoff- oder Kartonschicht und werden anschließend barriereschichtseitig eine weitere Haftvermittlerschicht und wenigstens eine weitere Barriereschicht aufgebracht.

Für das erfindungsgemäße Verbundmaterial können verschiedene Barriereschichten verwendet werden, insbesondere solche aus Metallfolien, metallisierte Kunststofffolien, Ethylen/Vinylalkohol, Polyethylenterephtalat, Polypropylen, Polyvinylidenchlorid, Polyamid, flüssigkristallinen Polymeren und Siliziumoxid.

## Patentansprüche

1. Verfahren zur Herstellung eines Verbundmaterials, insbesondere für sterilisierbare oder autoklavierbare Verpackungen, mit wenigstens einer Barriereschicht, wobei zur Erhöhung der Haftung zwischen der Barriereschicht und einer Kunststoff- oder Kartonschicht wenigstens eine Haftvermittlerschicht vorgesehen ist,
**dadurch gekennzeichnet, dass** vor dem Aufbringen der Haftvermittlerschicht eine Wärmebehandlung der zu beschichtenden Schichten erfolgt.

2. Verfahren nach Anspruch 1,
**dadurch gekennzeichnet, dass** die Wärmebehandlung auf der Oberfläche der zu beschichtenden Schicht erfolgt.

3. Verfahren nach Anspruch 1,
**dadurch gekennzeichnet, dass** die Wärmebehandlung auf der der Schicht abgewandten Oberfläche der zu beschichtenden Schicht erfolgt.

4. Verfahren nach Anspruch 1 oder 2,
**dadurch gekennzeichnet, dass** die Wärmebehandlung eine Flammbehandlung ist.

5. Verfahren nach Anspruch 1 oder 2,
**dadurch gekennzeichnet, dass** die Wärmebehandlung eine Heißluftbehandlung ist.

6. Verfahren nach Anspruch 1 oder 2,
**dadurch gekennzeichnet, dass** die Wärmebehandlung eine Laserbehandlung ist.

7. Verfahren nach Anspruch 1 oder 2,
**dadurch gekennzeichnet, dass** die Wärmebehandlung eine Coronabehandlung ist.

8. Verfahren nach Anspruch 1 oder 2,
**dadurch gekennzeichnet, dass** die Wärmebehandlung eine Hochfrequenz-Behandlung ist.

9. Verfahren nach Anspruch 1 oder 2,
**dadurch gekennzeichnet, dass** die Wärmebehandlung mittels elektrischer Beheizung erfolgt.

10. Verfahren nach einem der Ansprüche 1 bis 9,
**dadurch gekennzeichnet, dass** die Wärmebehandlung impulsartig erfolgt.

11. Verfahren nach einem der Ansprüche 1 bis 10,
**dadurch gekennzeichnet, dass** die Wärmebehandlung erst nach dem Aufbringen einer ersten Barriereschicht auf eine Kunststoff- oder Kartonschicht erfolgt und dass anschließend barriereschichtseitig eine weitere Haftvermittlerschicht und wenigstens eine weitere Barriereschicht aufgebracht werden.

12. Verbundmaterial,
**dadurch gekennzeichnet, dass** es nach einem der Ansprüche 1 bis 11 hergestellt ist.

13. Verbundmaterial nach Anspruch 12,
**dadurch gekennzeichnet, dass** als Barriereschicht eine Metallfolie verwendet wird.

14. Verbundmaterial nach Anspruch 12,
**dadurch gekennzeichnet, dass** eine metallisierte Kunststofffolie verwendet wird.

15. Verbundmaterial nach Anspruch 12,
**dadurch gekennzeichnet, dass** die Barriereschicht aus Ethylen/Vinylalkohol (EVOH) besteht.

16. Verbundmaterial nach Anspruch 12,
**dadurch gekennzeichnet, dass** die Barriereschicht aus Polyethylenterephtalat (PET) besteht.

17. Verbundmaterial nach Anspruch 12,
**dadurch gekennzeichnet, dass** die Barriereschicht aus Polypropylen (PP) besteht.

18. Verbundmaterial nach Anspruch 12,
**dadurch gekennzeichnet, dass** die Barriereschicht aus Polyvinylidenchlorid (PVDC) besteht.

19. Verbundmaterial nach Anspruch 12,
**dadurch gekennzeichnet, dass** die Barriereschicht aus Polyamid (PA) besteht.

20. Verbundmaterial nach Anspruch 12,
**dadurch gekennzeichnet, dass** die Polyamidschicht aus PA6 besteht.

21. Verbundmaterial nach Anspruch 12,
**dadurch gekennzeichnet, dass** die Barriereschicht aus flüssigkristallinen Polymeren (LCP) besteht.

22. Verbundmaterial nach Anspruch 12,
**dadurch gekennzeichnet, dass** die Barriereschicht aus Cyclo-Olefine-Copolymeren (COC) besteht.

23. Verbundmaterial nach Anspruch 12,
**dadurch gekennzeichnet, dass** die Barriereschicht aus Siliziumoxid besteht.
